Europäisches Patentamt

**European Patent Office**

**Office européen des brevets**

(11) Numéro de publication: **0 144 256**
**B1**

(12) **FASCICULE DE BREVET EUROPEEN**

(45) Date de publication du fascicule du brevet:
**26.08.87**

(21) Numéro de dépôt: **84402158.4**

(22) Date de dépôt: **26.10.84**

(51) Int. Cl.⁴: **G 21 C 11/08, G 21 C 1/02**

(54) **Dispositif de protection thermique d'un composant d'un réacteur nucléaire à neutrons rapides.**

(30) Priorité: **28.10.83 FR 8317280**

(43) Date de publication de la demande:
**12.06.85 Bulletin 85/24**

(45) Mention de la délivrance du brevet:
**26.08.87 Bulletin 87/35**

(84) Etats contractants désignés:
**BE DE GB IT NL**

(56) Documents cités:
**EP - A - 0 022 030**
**EP - A - 0 067 103**
**FR - A - 2 379 881**

(73) Titulaire: **NOVATOME, La Boursidière R.N. 186,**
**F-92357 Le Plessis Robinson (FR)**

(72) Inventeur: **Fernandez, Luis, 22 Impasse de la Cerisaie,**
**F-91120 Palaiseau (FR)**
Inventeur: **Mauget, Christian, 9 rue du Bois Troquet,**
**F-91220 Bondoufle (FR)**

(74) Mandataire: **Moncheny, Michel et al, c/o Cabinet**
**Lavoix 2 Place d'Estienne d'Orves, F-75441 Paris**
**Cedex 09 (FR)**

## Description

L'invention concerne un dispositif de protection thermique d'un composant d'un réacteur nucléaire à neutrons rapides avec circulation de gaz de couverture entre le composant et la dalle du réacteur.

Les réacteurs nucléaires à neutrons rapides comportent une cuve de grandes dimensions à axe vertical remplie de métal liquide jusqu'à un certain niveau et fermée par une dalle horizontale. Le volume compris entre le niveau supérieur du métal liquide qui est généralement du sodium et la dalle est rempli par un gaz de couverture inerte qui peut être de l'argon. Cet argon en légère surpression par rapport à l'atmosphère permet d'éviter toute rentrée d'air dans la cuve du réacteur nucléaire et tout contact du sodium liquide evec un gaz renfermant de l'oxygène.

La dalle horizontale du réacteur nucléaire de grande épaisseur est constituée par un caisson métallique rempli de béton. A l'intérieur de ce caisson sont ménagées des traversées cylindriques à axe vertical permettant le passage des composants du réacteur. Ces composants sont de dimensions et de structures très différentes suivant leur utilisation dans la cuve du réacteur nucléaire. Tous ces composants ont leur partie inférieure qui plonge dans le sodium liquide remplissant la cuve.

En particulier, les pompes primaires et les échangeurs intermédiaires du réacteur sont constitués sous la forme de composants de grand diamètre de forme générale cylindrique et de grande longueur disposés dans la cuve avec leur axe vertical.

Tous ces composants comportent à leur partie supérieure une bride d'appui qui vient reposer sur la dalle du réacteur pour maintenir le composant en position de service dans la cuve du réacteur.

Les traversées des composants ménagées à travers la dalle ont un diamètre intérieur sensiblement supérieur au diamètre de la partie du composant qui se trouve au niveau de cette traversée dans sa position de service. Un espace annulaire de largeur relativement importante est donc ménagé entre le composant et la dalle.

Certains composants tels que les échangeurs intermédiaires ont leur paroi externe, dans la région de traversée de la dalle, à une très haute température pendant le fonctionnement du réacteur. Un échangeur intermédiaire constitue en effet une enceinte à l'intérieur de laquelle du sodium liquide secondaire à haute température, supérieure à 500°C circule de bas en haut en contact avec la paroi externe de l'échangeur.

D'autres composants comme les pompes, au contraire, ont une paroi dont la température reste relativement modérée dans la zone de traversée de la dalle. Dans tous les cas cependant, la surface externe du composant dont la partie inférieure plonge dans le sodium a une température largement supérieure à la température de la dalle qui est voisine de 100°C, au niveau des traversées de composants.

Il se produit donc des phénomènes d'échanges de chaleur entre les composants et la dalle du réacteur dans l'espace annulaire existant entre le composant et la traversée.

Ces échanges de chaleur par rayonnement et par convection entrainent localement un échauffement de la structure de la dalle et plus particulièrement de la traversée qui crée des contraintes internes dans cette dalle et peut être cause de déformations de sa structure. D'autre part, le gaz de couverture inerte pénétrant dans les ecpaces annulaires entre les composants et la dalle a tendance à accroître les échanges thermiques tout en favorisant la création de zones chaudes sur les traversées de la dalle, par circulation locale entre le composant et la traversée. Il serait bien entendu souhaitable d'éviter cette apparition de zones à haute température et d'obtenir une température la plus uniforme possible des traversées de la dalle en canalisant la circulation du gaz de couverture dans les espaces annulaires entre les composants et la dalle.

On connaît, par le EP-A-22 030, un dispositif de protection thermique de la dalle de béton d'un réacteur nucléaire à neutrons rapides, par rapport à un composant qui la traverse. Ce dispositif est constitué par une virole à axe vertical située entre le composant et la dalle, d'une longueur supérieure à l'épaisseur de la dalle et reliée à la bride d'appui du composant à sa partie supérieure, de façon à séparer l'espace annulaire entre le composant et la dalle en deux espaces annulaires. Un tel dispositif ne permet cependant pas de réaliser une circulation de gaz pour éviter toute apparition de zone à haute température dans la traversée.

Le but de l'invention est donc de proposer un dispositif de protection thermique d'un composant d'un réacteur nucléaire à neutrons rapides, avec circulation de gaz de couverture entre le composant et la dalle du réacteur, le réacteur nucléaire comportant une cuve remplie de métal liquide surmonté par une couche de gaz neutre de couverture et fermée par une dalle percée de traversées cylindriques à axe vertical par chacune desquelles la partie inférieure d'un composant de grande longueur, disposé avec son axe vertical et muni d'une bride d'appui sur la dalle, pénètre dans la cuve du réacteur, les diamètres des composants et de la traversée de la dalle étant prévus pour qu'un espace annulaire soit ménagé entre le composant et la dalle, au moins une virole d'un diamètre inférieur au diamètre intérieur de la traversée mais supérieur au diamètre du composant dans sa partie située dans la traversée, d'une longueur supérieure à la longueur de la traversée, c'est-à-dire à l'épaisseur de la dalle étant reliée à la bride d'appui du composant à sa partie supérieure de façon à séparer l'espace annulaire entre le composant et la traversée en deux espaces annulaires, dispositif qui permette d'obtenir un échauffement limité des traversées de la dalle et une température presque uniforme de ces traversées tout en étant d'une structure très simple permettant une mise en place facile du composant sur la dalle.

Dans ce but, lesdits espaces sont mis en communication l'un avec l'autre uniquement au voisinage de la partie inférieure de la dalle et dans la partie supérieure de la virole, en-dessous de la bride d'appui du composant, par au moins un ensemble d'ouvertures traversant la virole dans une zone annulaire de celle-ci, d'axe vertical.

Afin de bien faire comprendre l'invention, on va maintenant décrire à titre d'exemples non limitatifs, en se référant aux figures jointes en annexe, deux modes de réalisation d'un dispositif de protection thermique suivant l'invention, dans le cas d'une pompe primaire et dans le cas d'un échangeur intermédiaire.

La figure 1 est une vue schématique en coupe par un plan vertical d'une partie d'une pompe primaire munie d'un dispositif de protection thermique, au niveau de sa traversée dans la dalle.

La figure 1a est une vue en perspective des viroles du dispositif de protection thermique représenté à la figure 1.

La figure 2 est une vue en coupe par un plan vertical d'une partie d'un échangeur intermédiaire muni d'un dispositif de protection thermique suivant l'invention, au niveau de sa traversée de la dalle.

La figure 2a est une vue partielle en perspective d'une des viroles constituant le dispositif de protection thermique.

La figure 2b est une vue partielle en perspective de l'autre virole constituant le dispositif de protection thermique.

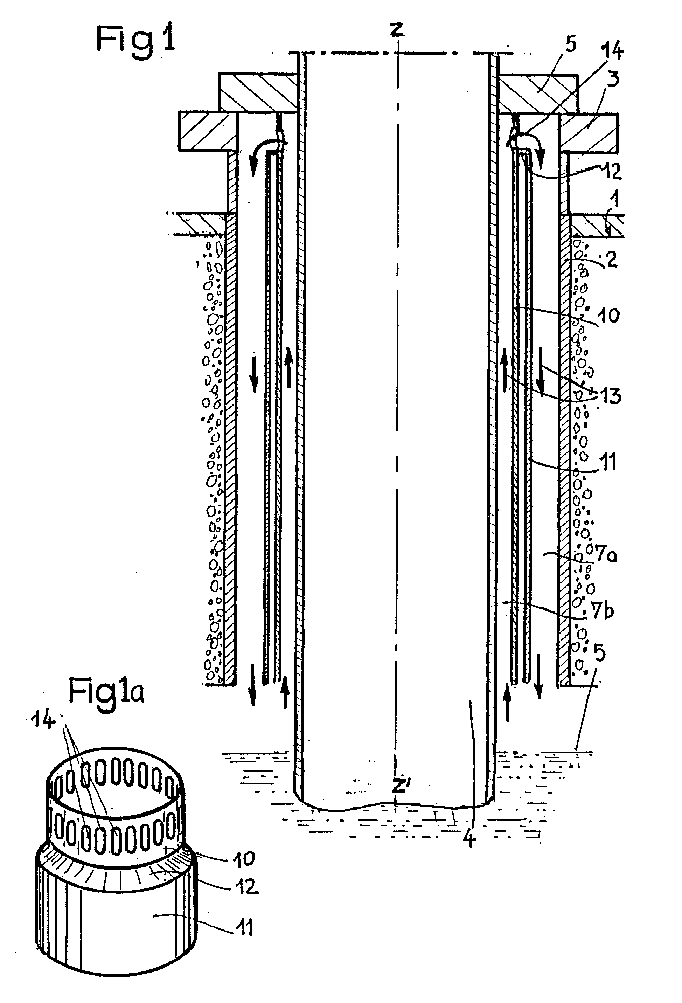

Sur la figure 1, on voit une partie de la dalle 1 d'un réacteur nucléaire à neutrons rapides au niveau d'une traversée de pompe 2 constituée par une virole prolongée à une certaine hauteur au-dessus de la surface supérieure de la dalle 1 et portant une bride de support 3 du composant. Le composant est constituée par une pompe primaire 4 dont la partie inférieure non représentée plonge sous le niveau 5 du sodium liquide remplissant la cuve du réacteur fermée par la dalle 1. L'enveloppe externe cylindrique de la pompe 4 qui est le seul élément de cette pompe représenté est solidaire d'une bride d'appui 5 venant reposer sur la bride de support 3, lorsque la pompe est en position de service comme représenté à la figure 1.

La bride supérieure de la pompe comportant en particulier son moteur d'entraînement n'a pas été représentée. Le diamètre de l'enveloppe externe de la pompe 4 est sensiblement inférieur au diamètre intérieur de la traversée 2, si bien qu'un espace annulaire 7 est ménagé entre la pompe 4 et la traversée 2.

De l'argon de couverture remplit le volume situé entre le niveau supérieur 5 du sodium liquide et la surface inférieure de la dalle 1. Cet argon pénètre également dans l'espace annulaire 7 autour du composant 4.

Une virole 10 est fixée sous la bride d'appui 5 du composant de façon à être coaxiale à ce composant 4 et à la traversée 2, l'axe commun à ces éléments étant l'axe vertical ZZ'.

Une seconde virole 11 coaxiale à la virole 10 et d'un diamètre très légèrement supérieur est fixée sur celle-ci à sa partie supérieure par l'intermédiaire d'une couronne soudée 12.

Comme il est visible sur la figure 1a, la virole 10 comporte dans sa partie située au-dessus de la seconde virole 11 des ouvertures 14 réparties suivant une zone annulaire d'axe ZZ' tout autour de cette virole 10.

L'enveloppe extérieure de la pompe 4 s'échauffe par conduction, la partie inférieure de la pompe comportant sa partie active plongeant dans le sodium liquide. En revanche, le volume de la dalle reste à une température modérée. Les viroles 10 et 11 permettent d'éviter un transfert intense de chaleur par rayonnement, entre la surface de l'enveloppe externe de la pompe 4 et la traversée 2.

Les viroles 10 et 11 partagent également l'espace annulaire 7 en deux espaces annulaires 7a et 7b, ces espaces communiquant l'un et l'autre à leur partie inférieure avec la couverture d'argon située au-dessus du niveau 5 du sodium liquide et entre eux, à leur partie supérieure, par les ouvertures 14 de la virole 10. L'argon de couverture qui est à une température de l'ordre de 350°C, c'est-à-dire à une température intermédiaire entre la température de la surface externe de la pompe et la température de la dalle s'élève dans l'espace intérieur 7b et s'échauffe au contact de la pompe puis est arrêté par la bride 5 et redescent dans l'espace 7a où ce gaz est refroidi au contact de la traversée 2. Il s'établit donc une circulation naturelle d'argon suivant les flèches 13 visibles sur la figure 1.

Cette circulation naturelle a lieu de façon identique sur toute la périphérie de la pompe et de la traversée 2. Il se produit donc un certain refroidissement de l'enveloppe externe de la pompe et un réchauffement limité de la traversée 2 en même temps qu'une homogénéisation de la température suivant toute la hauteur de la traversée.

Dans le cas d'une pompe dont la température de l'enveloppe externe est relativement modérée, il serait possible d'obtenir une protection thermique suffisante en utilisant une seule virole 10, la virole 11 permettant cependant de limiter encore les échanges par rayonnement et de créer une zone d'argon stagnant d'isolation entre les viroles 10 et 11.

Dans le cas d'un composant dont la surface externe est à très haute température comme un échangeur intermédiaire, une telle disposition à double viroles de protection serait nécessaire.

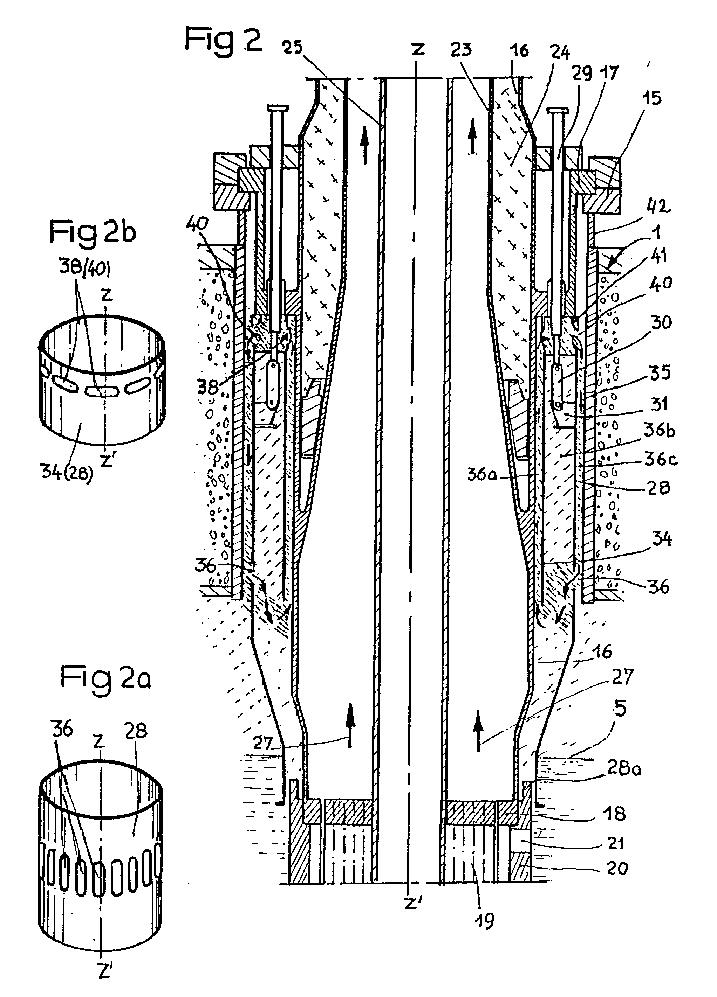

Sur la figure 2, on voit une partie de la dalle 1 du réacteur comportant une traversée 42 portant une bride de support 15 permettant le passage et la mise en place d'un échangeur de chaleur intermédiaire dont l'enveloppe externe 16 porte une bride d'appui 17 reposant sur la bride de support 15 lorsque l'échangeur de chaleur intermédiaire est en position de service comme représenté sur la figure 2.

L'échangeur de chaleur intermédiaire comporte une plaque tubulaire supérieure 18 fixée à la partie inférieure de l'enveloppe 16, un faisceau tubulaire 19 plongeant dans le sodium liquide dont seule la partie supérieure a été représentée et une enveloppe faisceau 20 percée d'une fenêtre d'entrée de sodium 21 à sa partie supérieure.

A sa partie supérieure, l'enveloppe externe de l'échangeur intermédiaire est reliée à une enveloppe interne 23 par une pièce de révolution à section en Y.

Entre l'enveloppe 16 et l'enveloppe 23 est placé un matériau calorifuge 24 permettant de limiter la déperdition calorifique par la paroi de l'échangeur intermédiaire.

L'échangeur intermédiaire comporte à sa partie centrale un conduit tubulaire 25 coaxial à l'enveloppe 16 communiquant à sa partie inférieure non représentée avec une chambre en communication avec la face d'entrée de la plaque tubulaire inférieure du faisceau tubulaire 19, non représentée.

Le conduit 25 permet l'arrivée de sodium secondaire «froid» venant d'un générateur de vapeur du réacteur nucléaire. Ce sodium secondaire «froid» est distribué dans le faisceau 19 où il entre en contact thermique avec le sodium primaire contenu dans la cuve jusqu'au niveau 5, ce qui produit l'échauffement du sodium secondaire jusqu'à une température de 525°C. Pour sa mise en contact thermique avec le sodium secondaire, le sodium primaire entre dans l'enveloppe du faisceau 20 par une fenêtre supérieure 21 et ressort par une fenêtre inférieure non représentée.

Le sodium secondaire à haute température sortant du faisceau 19 parcourt l'espace annulaire entre l'enveloppe externe 16 et le tube intérieur 25 suivant la direction des flèches 27. La paroi extérieure 16 de l'échangeur intermédiaire est donc à haute température.

Une virole cylindro-cônique 28 est disposée de façon coaxiale par rapport à l'échangeur et par rapport à la traversée 2, tous ces éléments ayant comme axe l'axe vertical ZZ'. La virole 28 est reliée à la bride d'appui 17 de l'échangeur intermédiaire par l'intermédiaire de tiges 29, de biellettes 30 et de pièces d'accrochage 31. Les tiges 29 permettent le déplacement en translation verticale de la virole cylindro-cônique 28 entre une position haute comme représenté sur la figure 2 et une postition basse où la partie cylindrique inférieure 28a de la virole 28 vient masquer la fenêtre 21 d'entrée du sodium primaire dans le faisceau 19. Cette partie 28a de la virole 28 constitue donc le volet de fermeture de l'échangeur intermédiaire. De tels volets mobiles suspendus à des tiges de grande longueur sont généralement utilisés pour fermer l'ouverture d'arrivée du sodium primaire et pour mettre l'échangeur intermédiaire dans son état hors service.

Le dispositif de protection thermique comporte également une virole interne 34 fixée de façon rigide sous la bride 17 de l'échangeur intermédiaire.

Comme il est visible à la figure 2a qui représente une partie de la portion cylindrique médiane de la virole 28, cette virole 28 est persée d'ouvertures 36 suivant une couronne d'axe ZZ' sour toute sa circonférence. Lorsque la virole 28 est en position haute, le volet 28a étant ouvert et l'échangeur intermédiaire en service, les ouvertures 36 sont au niveau de la partie inférieure de la dalle 1 du réacteur.

Comme il est visible sur la figure 2b, la virole intérieure 34 est percée d'ouvertures 38 disposées suivant une zone annulaire sur toute la périphérie de la partie supérieure de cette virole. Il en est d'ailleurs de même de la virole 28 dont la partie cylindrique supérieure est percée d'ouvertures 40. La figure 2b est susceptible de représenter soit la partie supérieure de la virole 28 soit la partie supérieure de la virole 34. Au-dessus des ouvertures 40, la virole 28 porte un anneau 41 qui constitue une butée pour cette virole 28 en fin de mouvement vers le haut, grâce aux tiges 29, lors de la mise en service de l'échangeur intermédiaire. L'anneau 41 vient alors en butée sur la surface inférieure de la bride 17 de l'échangeur solidaire de la paroi extérieure 16 de cet échangeur.

Lorsque l'échangeur intermédiaire est en service, le réacteur nucléaire étant en fonctionnement, le niveau supérieur 5 du sodium liquide dans la cuve de réacteur est surmonté par une couche d'argon de couverture qui est à une température de l'ordre de 350°C. Cet argon de couverture vient également remplir les espaces annulaires compris entre les échangeurs intermédiaires et les traversées de la dalle correspondantes. Le sodium secondaire échauffé jusqu'à 525°C remonte dans l'échangeur intermédiaire par sa partie périphérique suivant le trajet des flèches 27.

Les viroles 28 et 34 séparent l'espace annulaire compris entre la paroi 16 de l'échangeur intermédiaire à haute température et la traversée 42 en trois espaces annulaires 36a, 36b et 36c. Les deux viroles 28 et 34 réduisent le flux de rayonnement thermique entre la paroi 16 de l'échangeur et la traversée 42.

La paroi 16 de l'échangeur intermédiaire est à une température de 525°C alors que la dalle est à une température de 100°C.

L'argon à 350°C venant au contact de la paroi 16 à la base de l'espace annulaire 36 s'échauffe et monte dans la partie intérieure 36a de l'espace annulaire en s'échauffant, puis atteint la partie supérieure de la virole 34 où cet argon échauffé traverse les ouvertures 38 et 40 des viroles 34 et 28 respectivement pour venir au contact de la traversée 42 dans la partie 36c de l'espace annulaire 36. L'argon redescend alors en se refroidissant jusqu'aux ouvertures inférieures 36 de la virole 38 puis revient à nouveau dans la partie 36a de l'espace annulaire. Il s'établit donc une circulation naturelle de l'argon suivant les flèches 35. Cette circulation naturelle a pour effet d'homogénéiser circonférentiellement la température de la paroi externe 16 de l'échangeur.

On voit donc que les principaux avantages du dispositif suivant l'invention sont de permettre une limitation du flux thermique de rayonnement entre la paroi extérieure d'un composant du réacteur nucléaire et la traversée correspondante à un niveau très bas et une circulation naturelle d'argon entre le composant et la traversée correspondante, ce qui entraine une meilleure répartition de la température dans la traversée et dans la dalle.

Dans le cas d'un échangeur intermédiaire, l'utilisation d'une des viroles du dispositif de protection pour constituer le volet de fermeture de la fenêtre supérieure de l'échangeur intermédiaire entraîne une simplification du mécanisme de commande du volet de fermeture et une augmentation de la fiabilité de ce mécanisme. En effet, les tiges de commande du volet peuvent être d'une longueur très inférieure à ce qu'elle était dans les dispositifs de l'art antérieur où ces tiges devaient joindre un point disposé au-dessus de la bride du composant au volet situé au niveau de la partie supérieure du faisceau. L'ensemble de commande du volet est également plus rigide et son guidage est mieux assuré grâce à la présence d'une virole sur toute la hauteur de la traversée.

L'invention ne se limite pas aux modes de réalisation qui ont été décrits; elle en comporte au contraire toutes les variantes couvertes par les revendications.

C'est ainsi que dans le cas d'un échangeur intermédiaire, la virole externe constituant en même temps le volet mobile de l'échangeur intermédiaire peut venir en butée haute contre une partie de la virole interne à une certaine distance en-dessous de la bride de support composant. De ce fait, un espace est réservé au-dessus de cette virole externe et en-dessous de la bride d'appui du composant, pour le passage de l'argon en circulation naturelle. Il n'est donc pas nécessaire de prévoir des ouvertures à la partie supérieure de la virole externe. De façon générale, il n'est pas toujours nécessaire de prévoir des ouvertures soit à la partie inférieure soit à la partie supérieure de la ou des viroles constituant le dispositif de protection, les longueurs de ces viroles et leur position par rapport à la dalle ou aux brides d'appui vers le bas et vers le haut pouvant permettre un passage d'argon en-dessous ou au-dessus de ces viroles. Dans tous les cas cependant, il faut s'assurer un passage d'argon sur toute la périphérie des viroles de protection.

Suivant le type de composant et la température externe de ce composant, il sera possible d'utiliser seulement une ou deux viroles de protection séparant l'espace annulaire entre composant et traversée en deux ou trois parties annulaires.

Dans le cas où deux viroles de protection coaxiales sont utilisées, l'espace central limité par ces deux viroles se remplit d'argon mais cet argon ne peut pas circuler, si bien qu'il constitue une couche stagnante à une température intermédiaire entre la température des deux viroles.

Enfin, l'invention s'applique dans le cas de tout composant d'un réacteur nucléaire à neutrons rapides comportant une cuve remplie de métal liquide fermée par une dalle horizontale et traversant cette dalle. L'invention s'applique en particulier dans le cas des réacteurs nucléaires intégrés refroidis au sodium liquide aussi bien que dans le cas des réacteurs nucléaires à neutrons rapides du type à boucle ou dans le cas des réacteurs nucléaires comportant non seulement des échangeurs intermédiaires mais encore des générateurs de vapeur intégrés.

**Revendications**

1. Dispositif de protection thermique d'un composant d'un réacteur nucléaire à neutrons rapides avec circulation de gaz de couverture entre le composant (4) et la dalle (1) du réacteur, le réacteur nucléaire comportant une cuve remplie de métal liquide surmonté par une couche de gaz neutre de couverture et fermée par une dalle (1) percée de traversées cylindriques (2, 42) à axe vertical par chacune desquelles la partie inférieure d'un composant (4, 16) de grande longueur disposé avec son axe vertical et muni d'une bride d'appui (5, 17) sur la dalle (1) pénètre dans la cuve du réacteur, les diamètres des composants (4, 16) et de la traversée (2, 42) de la dalle (1) étant prévus pour qu'un espace annulaire soit ménagé entre le composant (4, 16) et la dalle (1), au moins une virole (10, 11, 28, 34) d'un diamètre inférieur au diamètre intérieur de la traversée (2, 42) mais supérieur au diamètre du composant (4, 16) dans sa partie située dans la traversée (2, 42), d'une longueur supérieure à la longueur de la traversée (2, 42), c'est-à-dire à l'épaisseur de la dalle (1), étant reliée à la bride d'appui (5, 17) du composant à sa partie supérieure de façon à séparer l'espace annulaire (7, 36) entre le composant (4, 16) et la traversée (2, 42) en deux espaces annulaires, caractérisé par le fait que les dits espaces sont mis en communication l'un avec l'autre uniquement au voisinage de la partie inférieure de la dalle (1) et dans la partie supérieure de la virole (10, 11, 28, 34) en-dessous de la bride d'appui (5, 17) du composant (4, 16), par au moins un ensemble d'ouvertures (14, 36, 38, 40) traversant la virole (10, 11, 28, 34) dans une zone annulaire de celle-ci, d'axe vertical ZZ'.

2. Dispositif de protection thermique suivant la revendication 1, caractérisé par le fait qu'il comporte deux viroles coaxiales séparant l'espace annulaire entre le composant (4, 16) et la traversée (2, 42) en trois espaces annulaires coaxiaux (7, 36).

3. Dispositif de protection thermique suivant la revendication 2, caractérisé par le fait que l'une des viroles (11) est fixée de façon rigide sur l'autre virole (10) qui est elle-même fixée à la partie inférieure de la bride d'appui (5) du composant, des ouvertures (14) étant prévues dans la paroi de la virole (10) fixée sur la bride d'appui (5) au-dessus de la seconde virole (11).

4. Dispositif de protection thermique suivant la revendication 3, caractérisé par le fait que la partie inférieure des viroles (10, 11) se trouve au niveau de la partie inférieure de la dalle (1).

5. Dispositif de protection thermique suivant la revendication 1, dans le cas où le composant (16) est un échangeur intermédiaire du réacteur nucléaire, caractérisé par le fait qu'il comporte une virole (28) reliée à la bride d'appui (17) de l'échangeur intermédiaire par des tiges (29) mobiles en translation verticale pour le déplacement de la virole (28) entre une position haute où cette virole occupe toute la hauteur de l'espace annulaire entre l'échangeur (16) et la dalle (1), des ouvertures (36) de la virole (28) étant alors au niveau de la partie inférieure de la dalle (1) et une position basse où la partie inférieure de la virole (28) vient fermer la fenêtre d'entrée (21) de l'échangeur intermédiaire (16) et constitue ainsi son volet de fermeture.

6. Dispositif de protection thermique suivant la revendication 5, caractérisé par le fait que dans sa position haute, la virole (28) est en butée par sa partie supérieure (41) sur la face inférieure de la bride d'appui (17) de l'échangeur intermédiaire (16) et comporte dans sa partie supérieure des ouvertures (40) sur toute sa périphérie.

7. Dispositif de protection thermique suivant la revendication 5, caractérisé par le fait qu'il comporte une seconde virole (34) coaxiale à la virole (28) et de diamètre inférieur fixée de façon rigide sous la bride d'appui (17) de l'échangeur de chaleur et comportant des ouvertures (38) dans sa partie supérieure sur toute sa périphérie.

8. Dispositif de protection thermique suivant la revendication 7, caractérisé par le fait que la virole mobile (28) vient en appui dans sa position haute sur une butée solidaire de la virole fixe (34) à une certaine distance en-dessous de la bride d'appui (17) de l'échangeur de chaleur.

## Patentansprüche

1. Anordnung zum thermischen Schutz eines Bauteils eines Kernreaktors mit schnellen Neutronen mit einer Schutzgaszirkulation zwischen dem Bauteil (4) und dem Deckel (1) des Reaktors, wobei der Kernreaktor einen mit flüssigem Metall gefüllten Behälter aufweist, der durch eine Schicht aus neutralem Schutzgas abgedeckt ist und wobei der Behälter durch einen Deckel (1) abgeschlossen ist, der mit zylinderförmigen Durchgangsöffnungen (2, 42) mit vertikaler Achse versehen ist, durch die jeweils der untere Teil eines Bauteils (4, 16) mit grosser Länge hindurchreicht, wobei das Bauteil mit seiner Achse vertikal angeordnet ist und mit einem Auflageflansch (5, 17) zur Auflage auf dem Deckel (1) versehen ist und in den Behälter des Reaktors eintaucht und die Durchmesser der Bauteile (4, 16) und der Durchgangsöffnungen (2, 42) durch den Deckel (1) so gewählt sind, dass ein Ringraum zwischen dem Bauteil (4, 16) und dem Deckel (1) gebildet wird und mindestens ein Ring (10, 11, 28, 34) mit einem Durchmesser kleiner als der Innendurchmesser der Durchgangsöffnung (2, 42) jedoch grösser als der Durchmesser des Bauteils (4, 16) in dem Teil des Bauteils, der in der Durchgangsöffnung (2, 42) angeordnet ist, vorgesehen ist, mit einer Länge, die grösser als die Länge der Durchgangsöffnung (2, 42), d.h. der Dicke des Deckels (1) ist, wobei der Ring am Auflageflansch (5, 17) des Bauteils mit seinem oberen Teil derart befestigt ist, dass er den Ringraum (7, 36) zwischen dem Bauteil (4, 16) und der Durchgangsöffnung (2, 42) in zwei Ringräume unterteilt, dadurch gekennzeichnet, dass die Räume untereinander in Verbindung stehen, ausschliesslich in der Nähe des oberen Bereiches des Deckels (1) und im oberen Bereich des Rings (10, 11, 28, 34) unterhalb des Auflageflansches (5, 17) des Bauteils (4, 16) durch mindestens eine Gruppe von Öffnungen (14, 36, 38, 40), die den Ring (10, 11, 28, 34) in einem seiner Ringbereiche mit vertikaler Achse ZZ' durchqueren.

2. Anordnung nach Anspruch 1, dadurch gekennzeichnet, dass sie zwei koaxial angeordnete Ringe aufweist, die den Ringraum zwischen dem Bauteil (4, 16) und der Durchgangsöffnung (2, 42) in drei koaxiale Ringräume (7, 36) unterteilt.

3. Anordnung nach Anspruch 2, dadurch gekennzeichnet, dass einer der Ringe (11) starr an dem anderen Ring (10) befestigt ist, der wiederum am unteren Teil des Auflageflansches (5) des Bauteils befestigt ist, wobei Öffnungen (14) in der Wandung des Rings (10) vorgesehen sind, der auf dem Auflageflansch (5) oberhalb des zweiten Rings (11) befestigt ist.

4. Anordnung nach Anspruch 3, dadurch gekennzeichnet, dass der untere Bereich der Ringe (10, 11) sich auf der Höhe des unteren Teils des Deckels (1) befindet.

5. Anordnung nach Anspruch 1, wobei das Bauteil (16) ein Zwischenwärmetauscher des Kernreaktors ist, gekennzeichnet durch einen Ring (28), der am Auflageflansch (17) des Zwischenwärmetauschers transversalvertikal beweglicher Stangen (29) befestigt ist, die zur Verschiebung des Rings (28) zwischen einer hohen Stellung, in der der Ring die gesamte Höhe des Ringraumes zwischen dem Wärmetauscher (16) und dem Deckel (1) besitzt, wobei die Öffnungen (36) des Rings (28) auf der Höhe des unteren Teils des Deckels (1) liegen und einer niedrigen Position, wo der untere Teil des Rings (28) das Eingangsfenster (21) des Zwischenwärmetauschers (16) verschliesst und somit seine Verschlussklappe bildet.

6. Anordnung nach Anspruch 5, dadurch gekennzeichnet, dass in der oberen Stellung der Ring (28) mit seinem oberen Teil (41) gegen die untere Fläche des Auflageflansches (17) des Zwischenwärmetauschers (16) anschlägt und in seinem oberen Teil Öffnungen (40) entlang der gesamten Peripherie aufweist.

7. Anordnung nach Anspruch 5, dadurch gekennzeichnet, dass sie einen zweiten Ring (34) aufweist, der koaxial zum Ring (28) verläuft und einen geringeren Durchmesser hat, der starr unterhalb des Auflageflansches (17) des Wärmetauschers angeordnet ist und in seinem oberen Teil entlang seiner gesamten Peripherie Öffnungen (38) aufweist.

8. Anordnung nach Anspruch 7, dadurch gekennzeichnet, dass der bewegliche Ring (28) in seiner oberen Stellung gegen einen Anschlag anstösst, der an dem starren Ring (34) in gewissem Abstand unterhalb des Auflageflansches (17) des Wärmetauschers angebracht ist.

## Claims

1. Device for thermal protection of a component of a fast neutron nuclear reactor with circulation of blanket gas between the component (4) and the reactor slab (1), the nuclear reactor incorporating a vessel filled with liquid metal under a layer of neutral blanket gas and closed by a slab (1) pierced with cylindrical passages (2, 42) with a vertical axis, through each of which the lower part of a long component (4, 16) arranged with its axis vertical and equipped with a flange (5, 17) for bearing on the slab (1) enters the reactor vessel, the diameters of the components (4, 16) and of the passage (2, 14) through the slab (1) being provided so that an annular space is arranged between the component (4, 16) and the slab (1), at least one shell (10, 11, 28, 34) of a diameter smaller than the inner diameter of the passage (2, 42) but greater than the diameter of the component (4, 16) in its part situated in the passage (2, 42), of a length greater than the length of the passage (2, 42), that is to say the slab thickness (1), being connected to the bearing flanges (5, 17), of the component in its top part so as to divide the annular space (7, 36) between the component (4, 16) and the passage (2, 42) into two annular spaces characterized by the fact that the said spaces communicate with each other only in the vicinity of the lower part of the slab (1) and in the upper part of the shell (10, 11, 28, 34) below the bearing flange (5, 17) of the component (4, 16), by at least one set of openings (14, 36, 38, 40) passing through the shell (10, 11, 28, 34) in an annular zone of the latter, with a vertical axis ZZ'.

2. Device for thermal protection as claimed in claim 1, characterized by the fact that it incorporates two coaxial shells dividing the annular space between the the component (4, 16) and the passage (2, 42) into three coaxial annular spaces (7, 36).

3. Device for thermal protection as claimed in claim 2, characterized by the fact that one of the shells (11) is fixed rigidly to the other shell (10) which is itself fixed to the lower part of the bearing flange (5) of the component, openings (14) being provided in the wall of the shell (10) fixed on the bearing flange (5) above the second shell (11).

4. Device for thermal protection as claimed in claim 3, characterized by the fact that the lower part of the shells (10, 11) is at the level of the lower part of the slab (1).

5. Device for thermal protection as claimed in claim 1, in the case where the component (16) is an intermediate exchanger of the nuclear reactor, characterized by the fact that it incorporates a shell (28) connected to the bearing flange (17) of the intermediate exchanger by rods (29) movable in vertical translation for moving the shell (28) between a high position where this shell occupies the entire height of the annular space between the the exchanger (16) and the slab (1), openings (36) in the shell (28) being then at the level of the lower part of the slab (1) and a low position where the lower part of the shell (28) closes the inlet window (21) of the intermediate exchanger (16) and thus forms its closing shutter.

6. Device for thermal protection as claimed in claim 5, characterized by the fact that, in its high position, the shell (28) abuts with its upper part (41) on the lower face of the bearing flange (17) of the intermediate exchanger (16) and incorporates in its upper part openings (40) over its entire periphery.

7. Device for thermal protection as claimed in claim 5, characterized by the fact that it incorporates a second shell (34) coaxial with shell (28) and smaller in diameter, fixed rigidly under the bearing flange (17) of the heat exchanger and incorporating openings (38) in its upper part over its entire periphery.

8. Device for thermal protection as claimed in claim 7, wherein the movable shell (28) bears in its high position on an abutment attached integrally to the fixed shell (34) at some distance below the bearing flange (17) of the heat exchanger.

Fig 1

Fig 1a

Fig 2

Fig 2b

38(40)

34(28)

Fig 2a

36    28